# EUROPÄISCHE PATENTANMELDUNG

(11) **EP 4 369 572 A1**
(43) Veröffentlichungstag der Anmeldung: **15.05.2024**
(21) Anmeldenummer: 22206386.9
(22) Anmeldetag: 09.11.2022
(51) Int. Cl.: H02K 3/50, H02K 15/12

(54) **GEHÄUSELOSER MOTOR UND VERFAHREN ZU DESSEN HERSTELLUNG**

(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Plochmann, Bastian, 91413 Neustadt an der Aisch (DE)
(74) Vertreter: Siemens Patent Attorneys

(57) **Zusammenfassung**

Die Erfindung betrifft eine dynamoelektrische rotatorische Maschine (1), insbesondere gehäuselose dynamoelektrische Maschine, mit einem magnetisch leitfähigen hohlzylindrischen Körper, insbesondere einem Blechpaket (25) aus axial geschichteten Blechen, als Stator (2),
wobei Nuten (5) zu einer Innenmantelfläche (18) des hohlzylindrischen Körpers weisen, in denen ein Wicklungssystem (21) angeordnet ist, das an den Stirnseiten (III,IV) des hohlzylindrischen Körpers, also des Stators (2), Wickelköpfe (I, II) ausbildet,
wobei die Wickelköpfe (I,II) von halbseitig geöffneten torusförmigen Lagerschilden (8, 26) zumindest abschnittsweise umgeben sind, wobei die Lagerschilde (8) zumindest im radial äußeren Bereich des hohlzylindrischen Körpers mit den Stirnseiten (III,IV) des hohlzylindrischen Körpers, abschließen.

## Beschreibung

Die Erfindung betrifft eine gehäuselose dynamoelektrische Maschine und ein Verfahren zu dessen Herstellung als auch die Verwendung einer derartigen dynamoelektrischen Maschine.

Dynamoelektrische Maschinen, wie Elektromotoren, werden u.a. mittels gewickelten Rund-Lackdrähten hergestellt, welche nach einem Wickelprozess in das Blechpaket des Stators eingezogen werden. Die daran anschließenden Folgeprozesse werden häufig händisch oder teil-händisch ausgeführt. Diese sind zum einen das Ausformen des Wickelkopfes, das Bandagieren des Wickelkopfes und das Einbringen der Phasenisolation. Der Drahtlack entspricht im Anwendungsbereich der Niederspannungsmotoren (bis 1kV) der Hauptisolation.

Zur weiteren mechanischen Verfestigung sowie zur Passivierung vor äußeren Einflüssen schließt sich daran üblicherweise eine Imprägnierung an. Dies stellt fertigungstechnisch und prozessbedingt einen aufwändigen Vorgang dar, bei dem flüssiges Reaktivharz (z.B. Epoxy oder Polyester) in das Blechpaket des Stators eingebracht wird (vor allem durch Tauchen, aber auch Tauchrollieren oder Träufeln). Insbesondere der Imprägniervorgang, welcher oftmals in Form einer Tauchimprägnierung sowie einer anschließenden Heißluftofen-Härtung realisiert wird, ist ein großer Kostenfaktor in der Fertigung hinsichtlich der Investmentkosten, Wartung, Taktzeiten, Fertigungsplatzbedarf, etc.

Im Anschluss daran wird das Reaktivharz mit Zeit und Temperatur geliert und letztlich gehärtet, was üblicherweise durch Heißluft, Bestromung der Wicklung, Infrarot- oder Ultraviolett-Bestrahlung oder Induktion geschieht.

An herkömmlichen Fertigungsanlagen für dynamoelektrische Maschinen werden viele verschiedene Motorvarianten in einer Pufferzone gesammelt und danach in Batches bzw. Chargen in einer Imprägnieranlage imprägniert.

Bei der Fertigmontage der Motoren wird an die Welle ein Lüfter montiert, welcher die Entwärmung des Motors sicherstellen soll.

Ein Aluminiumgehäuse, welches mit Kühlrippen den Wärmeübergang zur konvektiven Luft begünstigt, wird zuletzt auf das Blechpaket des Stators aufgeschrumpft. Der Wärmeübergang aus dem Stator zu Gehäuse ist dabei ungenügend.

Eine Möglichkeit die Imprägnierung des gesamten Motors zu ersetzen, ist die Verwendung von sog. Backlackdraht als Kupferwicklung, d.h. einem speziellen Drahtlack, welcher als äußere Schichten teilvernetzte Duromere (Prepregs) besitzt, welche unter Temperatur aufschmelzen und verbacken (chemisch vernetzten, aushärten).

Nachteilig ist dabei, dass durch die erhöhte Schichtstärke des Drahtlackes der Kupferfüllfaktor in der Nut reduziert wird und somit die Effizienz des Motors im Betrieb reduziert wird.

Ausgehend davon liegt der Erfindung die Aufgabe zugrunde eine dynamoelektrische Maschine bereitzustellen, die die oben genannten Nachteile vermeidet.

Die Lösung der gestellten Aufgabe gelingt durch eine dynamoelektrische rotatorische Maschine, insbesondere gehäuselose dynamoelektrische Maschine, mit einem magnetisch leitfähigen hohlzylindrischen Körper, insbesondere einem Blechpaket aus axial geschichteten Blechen, als Stator,
wobei Nuten zu einer Innenmantelfläche des hohlzylindrischen Körpers weisen, in denen ein Wicklungssystem angeordnet ist, das an den Stirnseiten des hohlzylindrischen Körpers, also des Stators, Wickelköpfe ausbildet,
wobei die Wickelköpfe von halbseitig geöffneten torusförmigen Lagerschilden zumindest abschnittsweise umgeben sind,
wobei die Lagerschilde zumindest im radial äußeren Bereich des hohlzylindrischen Körpers mit den Stirnseiten des hohlzylindrischen Körpers, abschließen.

Die Lösung der gestellten Aufgabe gelingt auch durch ein Verfahren zur Herstellung eines Stators einer erfindungsgemäßen dynamoelektrischen rotatorischen Maschine, insbesondere gehäuselose dynamoelektrische Maschine, mit einem magnetisch leitfähigen hohlzylindrischen Körper, insbesondere einem Blechpaket aus axial geschichteten Blechen,
wobei Nuten zu einer Innenmantelfläche des hohlzylindrischen Körpers weisen, in denen ein Wicklungssystem angeordnet ist, das an den Stirnseiten des hohlzylindrischen Körpers Wickelköpfe ausbildet,
wobei an der Außenmantelfläche des hohlzylindrischen Körpers oberflächenvergrößernde Strukturen vorgesehen sind,
wobei die Wickelköpfe von halbseitig geöffneten torusförmigen Lagerschilden oder Adapterlagerschilden zumindest abschnittsweise umgeben sind, wobei die Lagerschilde zumindest im radial äußeren Bereich des hohlzylindrischen Körpers mit den Stirnseiten des hohlzylindrischen Körpers abschließen, durch folgende Schritte:
   - Herstellen eines magnetisch leitfähigen hohlzylindrischen Körpers, insbesondere eines Blechpaketes aus axial geschichteten Blechen, wobei Nuten zu einer Innenmantelfläche des hohlzylindrischen Körpers weisen und an der Außenmantelfläche des hohlzylindrischen Körpers oberflächenvergrößernde Strukturen ausgebildet werden,
   - Positionieren eines Wicklungssystems in den Nuten, so dass an den Stirnseiten des hohlzylindrischen Körpers Wickelköpfe ausgebildet werden,
   - Aufpressen von halbseitig geöffneten torusförmigen Lagerschilden auf die Wickelköpfe an den Stirnseiten des hohlzylindrischen Körpers, und einsetzen des Rotors,
   - Einbringen von flüssigem Imprägnierharz in zumindest einen Aufnahmeraum eines Wickelkopfes des Stators, insbesondere über einen Klemmenkastensockel, wobei die dynamoelektrische rotatorische Maschine an der Welle des Rotors gehalten und durch Kippen der Achse und/oder Dreh- und/oder Taumelbewegungen die Verteilung des Imprägnierharzes in der Nut und dem DE- und NDE-seitigen Lagerschild bewirkt.

Die Lösung der gestellten Aufgabe gelingt auch durch ein Verfahren zur Herstellung eines Stators einer erfindungsgemäßen dynamoelektrischen rotatorischen Maschine, insbesondere gehäuselose dynamoelektrische Maschine, mit einem magnetisch leitfähigen hohlzylindrischen Körper, insbesondere einem Blechpaket aus axial geschichteten Blechen,
wobei Nuten zu einer Innenmantelfläche des hohlzylindrischen Körpers weisen, in denen ein Wicklungssystem angeordnet ist, das an den Stirnseiten des hohlzylindrischen Körpers Wickelköpfe ausbildet,
wobei die Wickelköpfe von halbseitig geöffneten torusförmigen Lagerschilden oder Adapterlagerschilden zumindest abschnittsweise umgeben sind, wobei die Lagerschilde zumindest im radial äußeren Bereich des hohlzylindrischen Körpers mit den Stirnseiten des hohlzylindrischen Körpers abschließen, durch folgende Schritte:
   - Herstellen eines magnetisch leitfähigen hohlzylindrischen Körpers, insbesondere eines Blechpaketes aus axial geschichteten Blechen, wobei Nuten zu einer Innenmantelfläche des hohlzylindrischen Körpers weisen und an der Außenmantelfläche des hohlzylindrischen Körpers oberflächenvergrößernde Strukturen ausgebildet werden oder glatt ausgeführt ist,
   - Positionieren eines Wicklungssystems in den Nuten, so dass an den Stirnseiten des hohlzylindrischen Körpers Wickelköpfe ausgebildet werden,
   - Aufpressen von halbseitig geöffneten torusförmigen Lagerschilden oder Adapterlagerschilden auf die Wickelköpfe an den Stirnseiten des hohlzylindrischen Körpers,
   - Einbringen von flüssigem Imprägnierharz in zumindest einen Aufnahmeraum eines Wickelkopfes des Stators, insbesondere über eine axiale Öffnung im Adapterlagerschild, wobei der Stator der dynamoelektrischen rotatorischen Maschine am Au-ßenumfang gehalten ist und durch Kippen der Achse und/oder Dreh- und/oder Taumelbewegungen die Verteilung des Imprägnierharzes in der Nut und dem DE- und NDE-seitigen Lagerschild bewirkt.

Erfindungsgemäß sind bei einem Stator u.a. spezielle Lagerschilde bzw. Adapterlagerschilde vorgesehen, welche auf den noch nicht bandagierten und ausgeformten Wickelkopf des in Nuten des Stators eingelegten Wicklungssystems aufgepresst werden.

Dadurch, dass die dem Stator zugewandte Lagerschildform eine halbseitig geöffnete Torus-Form darstellt, wird der Wickelkopf in dieser Form beim axialen Aufbringen des Lagerschildes automatisch kompaktiert und mechanisch fixiert. Radial innen- und vor allem außenseitig schließt das Lagerschild danach formschlüssig an der jeweiligen Stirnseite des Blechpakets des Stators ab, wodurch eine abgeschlossene (Verguss-)Form entsteht. Wenigstens ein Aufnahmeraum der Wickelköpfe weist eine Imprägnieröffnung und damit eine Zuführmöglichkeit beispielsweise über einen Klemmenkasten oder ein Adapterlagerschild auf.

Dies kann vorzugsweise auch auf nur einer Seite durch eine Klemmkastensockelöffnung realisiert sein. Die Wicklung bzw. Wickelkopf liegt grundsätzlich - zumindest abschnittsweise an der Innenwand des Lagerschilds an, wodurch sich die anliegende Vergussmasse optimal am und im Wickelkopf verteilen kann und sich über Kapillare in die Nut des Stators und zum anderen Wickelkopf auf der anderen Stirnseite verteilt.

In einer Ausführung des insbesondere gehäuselosen Motors, sind Kühlrippen an der außenseitigen Mantelfläche des Blechpaketes des Stators vorhanden - somit ist die Funktion eines Gehäuses und dessen Kühlung ins Blechpaket des Stators integriert. Dabei sind an der Außenmantelfläche des hohlzylindrischen Körpers - also des Blechpakets des Stators - oberflächenvergrößernde Strukturen vorgesehen. Diese Strukturen können beispielsweise schon in die Bleche eingestanzt sein.

Diese Erfindung betrifft somit auch Motoren, welche nicht mehr zerlegt werden müssen/können. Sofern diese erfindungsgemäße Technik bei größeren und vergleichsweise teureren Statoren zur Anwendung kommen soll (also eine Zerlegung der Motoren), sind die Lagerschilde innen, zumindest im Bereich der Wickelköpfe - mit einer hydrophoben Beschichtung zu versehen (z.B. PTFE oder Trennmittel auf Si Basis).

Somit wäre der Motor im Anschluss zerlegbar, da sich das Imprägnierharz chemisch nicht mit dem Lagerschild verbindet und somit eine Entformung ermöglicht. Die Innenbeschichtung der Lagerschilde ist dabei ein Kostenfaktor, welcher mit der Möglichkeit einer Service-Inspektion abgewogen werden muss.

Das Lagerschild bzw. Adapterlagerschild ist gemäß den Anforderungen an die elektrische Isolation aus einem Kunststoff, z.B. einem Thermoplast gefertigt. Spezielle Additive, wie z.B. Glasfasern oder Keramikfasern sind vorteilhaft, um zum einen die mechanischen Eigenschaften des Kunststoffes zu verbessern und zum anderen die Wärmeleitfähigkeit (0,5-2,5 W/mK) zu erhöhen (reiner Kunststoff 0,2-0,3 W/mK).

Andere Additive, welche rein die Wärmeleitfähigkeit erhöhen, wie z.B. Quarzmehl, Quarzgut, Bornitrid, Al₂O₃ können zusätzlich oder alleinig sinnvoll sein, sofern die mechanischen Eigenschaften ausreichen. Die mechanische Festigkeit ist zumindest insofern gefordert, dass Befestigungsschraubengewinde oder Einlegemuttern in dafür vorgesehene Bereiche eingebracht werden können und für eine Montage am Blechpaket des Stators ausreichend stabil sein müssen.

Das Lagerschild als Vergussformteil aus einem gefüllten Duromer ist technisch ebenfalls sinnvoll, allerdings ggf. teurer als Spritzguss.

Eine Fertigung des Lagerschildes bzw. Adapterlagerschildes aus Keramik ist technisch ebenfalls sinnvoll, z.B. durch den sog. CIM Prozess (ceramic injection molding), wodurch eine keramische Paste mit geringem Bindemittelanteil in die halbseitig geöffnete Torus-Form gepresst wird und das Bindemittel im Anschluss ausgebrannt wird. Volumenschrumpf und Endgeometrie und Eigenschaften des Endprodukts sind hierbei sehr gut einstellbar. Die erreichbare Wärmeleitfähigkeit läge im Bereich von 10 W/mK oder höher.

Dadurch, dass die innenliegende Torusform der Lagerschilde bzw. Adapterlagerschilde den jeweiligen Wickelkopf mechanisch umformt und unter mechanischer Spannung fixiert, tritt eine sehr gute Wärmeanbindung an das Lagerschild im Betrieb der dynamoelektrischen Maschine ein und es kann erfindungsgemäß auf den vorhergehenden Formungsprozess und Bandagierprozess des Wickelkopfes verzichtet werden.

Im Bereich der Außenmantelfläche des Stators gibt es die Möglichkeit das Blechpaket des Stators mittels einer Kühlrippen-Außenstruktur zu verwenden, welche die Mantelfläche eines nunmehr nicht mehr notwendigen Gehäuses abbildet.

Hierbei ist die normalerweise mechanisch fixierende Wirkung des Gehäuses auf das Blechpaket des Stators zu beachten, welches Gehäuse aber erfindungsgemäß nicht vorhanden ist. Eine Möglichkeit der mechanischen Fixierung ist u.a. die Vollverklebung des Blechpaketes des Stators oder eine geeignete Außenlackierung, wodurch zum einen die Blechspalte zwischen den einzelnen Blechen verschlossen werden und zum anderen die mechanische Stabilität des Blechpakets gesichert wird.

Im Anschluss kann der Motor fertiggebaut und der Rotor in den Motor eingebracht werden.

Der Motor ist in diesem Zustand noch nicht imprägniert. Durch die Klemmkastensockelöffnung, oder ggf. anderweitig vorgesehene Imprägnieröffnungen, kann nun flüssiges Imprägnierharz in das Wicklungssystem des Stators eingebracht werden. Hierbei ist es sinnvoll, ein über eine Dispensiereinheit oder statisches Mischrohr vorgemischtes, zweikomponentiges (2-K) Imprägnierharz zu verwenden, welches bei vergleichsweise geringen Temperaturen, z.B. Raumtemperatur, innerhalb weniger Stunden, vorzugsweise unter einer Stunde, geliert und im Anschluss ebenso bei Raumtemperatur härtet.

Der Klemmenkastensockel ist normalerweise NDE-seitig am Motor angeordnet. Als NDE-Seite (Non-Drive-End-Seite) wird die Seite des Motors bezeichnet, die auf der, durch den Motor anzutreibenden Arbeitsmaschine (Getriebe, Kompressor, Pumpe,...) abgewandten Seite angeordnet ist.

Als DE-Seite (Drive-End-Seite) wird demnach die der Arbeitsmaschine zugewandte Seite des Motors bezeichnet.

So kann die Zeit und der Aufwand einer thermischen Härtung in einer Ofen- und Kühlstrecke vermieden werden. Mögliche Harze sind hierbei aminisch gehärtete Epoxide oder Polyurethansysteme.

Der ganze Motor kann beim Imprägniervorgang an seiner bereits montierten Welle gehalten werden und an dieser Welle in Rotation versetzt werden. Somit ist es möglich, das einfließende Harz, z.B. in einer gekippten Rotationsachse im ganzen Motor, insbesondere dem Wicklungssystem, also in den Nuten des Stators und den Wickelköpfen zu verteilen. Dabei wird das Lagerschild und die Welle zueinander fixiert, um diese Drehung zu ermöglichen.

Bei einseitiger Befüllung fungiert das dortige Lagerschild dabei als eine Art Harzreservoir, welches bis zur Kante der Statorbohrung befüllt werden kann (abhängig vom Neigungswinkel). Das Harz fließt durch die Neigung und eine geeignete Drehbewegung und/oder Taumelbewegung (Präzession und Nutation möglich) entlang der Nuten im Wesentlichen axial durch den Stator. Dies geschieht beispielsweise über Kapillare der Wicklung in den Nuten und/oder zwischen einem Nutkastenpapier und einem Deckschieberpapier als Kanal, bis das Harz den auf der anderen Seite des Stators befindlichen Wickelkopf erreicht und befüllt hat.

Durch den Kapillareffekt fließt das Harz vorzugsweise in der Wicklung bis zu einer gewissen Sättigung (Prinzip von Träufelimprägnierung auf horizontal liegende und rotierende Statoren). Durch die exakte Eindosierung der jeweils für den Stator richtigen Menge Harz in das eine Lagerschild und die bedarfsgerechte Einstellung des Neigungswinkels und der Rotationsgeschwindigkeit verteilt sich das Harz homogen im ganzen Wicklungssystem des Stators (Wickelköpfe und Wicklungen in den Nuten).

Vor allem durch eine vorgegebene Rotationsgeschwindigkeit wird aufgrund der Fliehkraftwirkung ein Harzfluss radial nach Innen in den Luftspalt vermieden, aber dennoch eine ausreichende Benetzung des Wicklungssystem geschaffen.

Um diesen Prozess zu präzisieren kann von der chemischen Seite des Harzes die Viskosität, sowie die Gelier- und Härtungsgeschwindigkeit des 2-K-Harzes so eingestellt werden, dass es gerade bei vollständiger Aufnahme des Harzes in der Kupferwicklung (also Wickelkopf auf NDE-Seite - Nuten - Wickelkopf auf DE-Seite) seine Viskosität derart bereits erhöht hat, dass es entgegen der Schwerkraft und durch die Kapillare dort verbleibt.

Eine Änderung des Kippwinkels weiter oder ganz in die Horizontale würde zu diesem Zeitpunkt (Harzreservoir Lagerschild NDE-Seite leer, Harz komplett in der Wicklung, ähnlich Träufelprozess) eine längere Gelierzeit erlauben, ohne Harz durch Abtropfen zu verlieren oder die Anlage zu verunreinigen.

Welche technische Ausführung zur Anwendung kommt ist hierbei eine Frage des Fertigungsaufwandes, z.B. der Fertigungs-Taktzeiten, des Materialpreises des Harzes und Anlagenpreises bei den angestrebten Motorvarianzen, wie unterschiedliche Wicklungen, Achslängen, usw.

Sobald dieser Prozess des Befüllens abgeschlossen ist und das Harz bis zu einer Grenzviskosität seine Rheologie verändert hat, also geliert ist, ist der Fertigungsprozess abgeschlossen und der fertige Motor kann eingelagert oder verpackt werden.

Bevorzugte 2-Komponenten-Harze härten bereits innerhalb von 24 Stunden bei Raumtemperatur aus und erhalten damit ihre Endeigenschaften. Somit ist gewährleistet, dass ohne weitere Maßnahmen der Motor bereits nach 24 Stunden einsatzbereit ist.

Durch die Nutzung von eigens aus Kunststoff oder ggf. Keramik gefertigten Lagerschilden, welche den Wickelkopf formen und mit der Stirnseite des Blechpakets eine Einhausung bilden, kann der Imprägniervorgang deutlich vereinfacht werden. Insbesondere unter Verwendung von zweikomponentigen Harzsystemen, welche bei sehr niedrigen Temperaturen, insbesondere Raumtemperatur reagieren und somit gelieren und härten, können aufwändige herkömmliche Heiz- und Kühlstrecken bei der Fertigung eingespart werden (z.B. Anlageninvestment, Fabrikflächenplanung, Taktzeiten, Energie, CO₂).

Der Einbringvorgang des Harzes ist durch die Klemmbrettöffnung am NDE-seitigen Lagerschild möglich, wobei der fertige Motor bereits an seiner Welle gehalten werden kann und leicht aus der Senkrechten gekippt rotieren kann, wodurch sich das Harz homogen in der Wicklung verteilt und härtet. Das NDE-seitige Lagerschild fungiert dabei zunächst als Harzreservoir für den weiteren Imprägnierprozess.

Falls das Lagerschild aus Metall ist, ist eine Isolierung zumindest innerhalb des torusförmigen Lagerschildes notwendig, das mit dem Wicklungssystem in Berührung kommt.

In einer weiteren Ausführung wird zumindest auf der NDE-Seite lediglich ein Adapterlagerschild vorgesehen, das den Einsatz von Düsen (radial von Innen an den Wickelkopf) zur Einbringung des Imprägnierharzes gestattet und nach Abschluss des Imprägnierprozesses ein anschließendes axiales Einsetzen des Rotors zusammen mit einem Lagerelement ermöglicht.

Dabei wird die Düse einer Imprägniervorrichtung axial über eine Öffnung des Adapterschildes in die Statorbohrung eingebracht und zumindest der NDE-seitige Wickelkopf mit Imprägnierharz beaufschlagt. Die Verteilung des Imprägnierharzes erfolgt wie oben beschrieben. Das Harz fließt durch die Neigung und eine geeignete Drehbewegung und/oder Taumelbewegung des Stators (Präzession und Nutation möglich) entlang der Nuten im Wesentlichen axial durch den Stator. Dies geschieht beispielsweise über Kapillare der Wicklung in den Nuten und/oder zwischen einem Nutkastenpapier und einem Deckschieberpapier als Kanal, bis das Harz den auf der anderen Seite des Stators befindlichen Wickelkopf erreicht und befüllt hat.

Durch den Kapillareffekt fließt das Harz vorzugsweise in der Wicklung bis zu einer gewissen Sättigung (Prinzip von Träufelimprägnierung auf horizontal liegende und rotierende Statoren). Durch die exakte Eindosierung der jeweils für den Stator vorgesehenen Menge Harz über die Düse und die bedarfsgerechte Einstellung des Neigungswinkels und der Rotationsgeschwindigkeit verteilt sich das Harz homogen im ganzen Wicklungssystem des Stators (Wickelköpfe und Wicklungen in den Nuten).

Vor allem durch eine vorgegebene Rotationsgeschwindigkeit wird aufgrund der Fliehkraftwirkung ein Harzfluss radial nach Innen in den Luftspalt vermieden, aber dennoch eine ausreichende Benetzung des Wicklungssystem geschaffen.

Um diesen Prozess zu präzisieren kann von der chemischen Seite des Harzes die Viskosität, sowie die Gelier- und Härtungsgeschwindigkeit des 2-K-Harzes so eingestellt werden, dass es gerade bei vollständiger Aufnahme des Harzes in der Kupferwicklung (also Wickelkopf auf NDE-Seite - Nuten - Wickelkopf auf DE-Seite) seine Viskosität derart bereits erhöht hat, dass es entgegen der Schwerkraft und durch die Kapillare dort verbleibt.

Eine Änderung des Kippwinkels weiter oder ganz in die Horizontale würde zu diesem Zeitpunkt (Harzreservoir Lagerschild NDE-Seite leer, Harz komplett in der Wicklung, ähnlich Träufelprozess) eine längere Gelierzeit erlauben, ohne Harz durch Abtropfen zu verlieren oder die Anlage zu verunreinigen.

Erst nach der Imprägnierung und vor dem Einsetzen des Rotors wird der Lagersitz auf der NDE-Seite im Adapterlagerschild geschaffen, beispielsweise gedreht.

Lagerelement und Adapterlagerschild bilden auf der NDE-Seite dann zusammen das Lagerschild.

Welche technische Ausführung zur Anwendung kommt ist hierbei eine Frage des Fertigungsaufwandes, z.B. der Fertigungs-Taktzeiten, des Materialpreises des Harzes und Anlagenpreises bei den angestrebten Motorvarianten, wie unterschiedliche Wicklungen, Achslängen, usw.

Herkömmliche Imprägnierprozesse sind Kalttauchprozesse mit styrolischen Polyesterimid-Harzen und anschließenden Ofenstrecken, die aufgrund des wenig fokussierten Energieeinsatzes wesentlich aufwändiger sind.

Durch die geometrische Innenform der Lagerschilde bzw. Adapterlagerschilde, welche beim Aufsetzen den Wickelkopf formt und verfestigt, entfallen die Fertigungsschritte Formen und Bandagieren.

Eine derartig hergestellte dynamoelektrische Maschine eignet sich aufgrund ihres einfachen Aufbaus, zuverlässigen Imprägnierung und optimierten Kühlung für vielfältige industrielle Anwendung als Pumpen, Kompressoren, Lüfter etc., z.B. in der Nahrungsmittelindustrie, Stahlindustrie, etc.

Die Erfindung sowie weitere vorteilhafte Ausgestaltungen der Erfindung werden anhand prinzipiell dargestellter Ausführungsbeispiele näher erläutert, darin zeigen:
- FIG 1: prinzipieller Längsschnitt einer dynamoelektrischen Maschine,
- FIG 2: Detailansicht einer Stirnseite mit beschichtetem Lagerschild,
- FIG 3: Detailansicht in zusammengebautem Zustand,
- FIG 4: Detailansicht einer Stirnseite,
- FIG 5 bis 7: ein prinzipieller Herstellungsvorgang,
- FIG 8: NDE-seitig geteiltes Lagerschild,
- FIG 9: Lagerelement.

Es sei angemerkt, dass sich Begriffe wie "axial", "radial", "tangential" etc. auf die in der jeweiligen Figur bzw. im jeweils beschriebenen Beispiel zum Einsatz kommende Achse 16 beziehen. Mit anderen Worten beziehen sich die Richtungen axial, radial, tangential stets auf eine Achse 16 des Rotors 3 und damit auf die entsprechende Symmetrieachse des Stators 2. Dabei beschreibt "axial" eine Richtung parallel zur Achse 16, "radial" beschreibt eine Richtung orthogonal zur Achse 16, auf diese zu oder auch von ihr weg, und "tangential" ist eine Richtung, die in konstantem radialem Abstand zur Achse 16 und bei konstanter Axialposition kreisförmig um die Achse 16 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 3 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

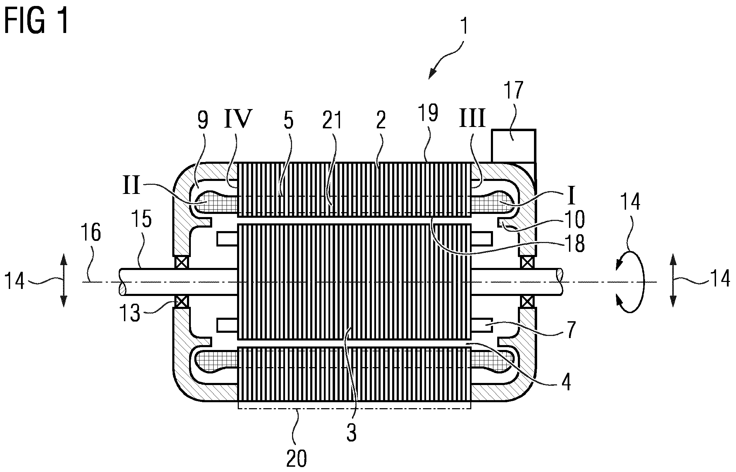

FIG 1 zeigt in einem prinzipiellen Längsschnitt eine dynamoelektrische Maschine 1 mit einem Stator 2. In dem magnetisch leitfähigen hohlzylindrischen Körper des Stators 2, der als axial geschichtetes Blechpaket ausgeführt ist, ist ein in Nuten 5 des Stators 2 positioniertes Wicklungssystem 21 vorhanden, das an den Stirnseiten III, IV des Stators 2 Wickelköpfe I, II ausbildet. Die Nuten 5 weisen zu der Innenmantelfläche 18 des Stators 2. Von einem Luftspalt 4 von der Innenmantelfläche 18 des Stators 2 beabstandet, befindet sich ein Rotor 3, der in diesem Fall beispielhaft als Käfigläufer 7 ausgeführt ist. Der Rotor 3 könnte ebenso zusätzlich oder anstatt mit Permanentmagneten ausgestattet sein, um einen Line-Start-Motor zu bilden oder als permanenterregter Synchronmotor zu arbeiten.

Der Rotor 3 ist mit einer Welle 15 drehfest verbunden und rotiert im Betrieb der dynamoelektrischen Maschine 1 um eine Achse 16. An den Stirnseiten III, IV des Stators 2 sind Lagerschilde 8 zur Aufnahme von Lagern 13 angebracht, die die Welle 15 stützen. An einem Lagerschild 8 ist zusätzlich ein Klemmkastensockel 17 vorgesehen. Die Wickelköpfe I, II sind von einem Imprägnierharz 23 umgeben, ebenso wie die Wicklung 21 in den Nuten 5.

Die Beschreibung der oben genannten gehäuselosen dynamoelektrischen Maschine 1 stellt das Endprodukt dar. In den folgenden Figuren wird auf den Herstellungsprozess näher eingegangen.

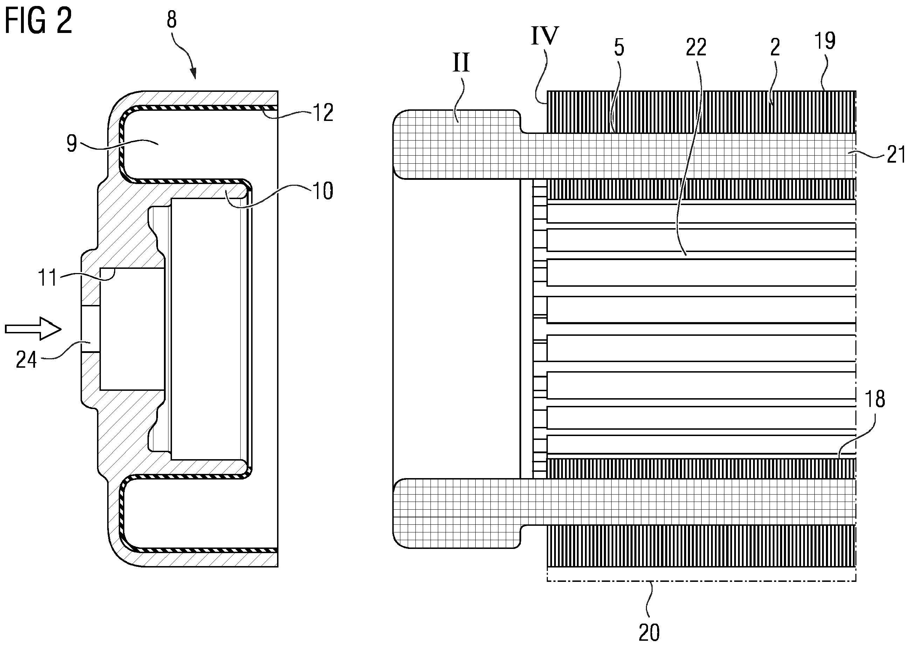

FIG 2 zeigt in einer Detaildarstellung die Stirnseite IV des Stators 2 ohne den Rotor 3, wobei das Lagerschild 8 noch nicht auf den Wickelkopf II gesetzt ist. Das Lagerschild 8 der Stirnseite IV weist dabei einen Wellendurchgang 24 und eine Lageraufnahme 11 auf, um ein Kugel- oder Wälzlager einzusetzen. Des Weiteren weist das Lagerschild 8 einen Aufnahmeraum 9 für den Wickelkopf II auf. Der Aufnahmeraum 9 des Lagerschildes 8, der insbesondere als halb geöffnete Torusform ausgebildet ist, somit derart gestaltet ist, dass der Wickelkopf II ausgeformt und komprimiert wird, um eine vergleichsweise gute Wärmeleitung vom Wickelkopf II zum Lagerschild 8 zu bilden. Diese Seite wird auch als **D**rive-**E**nd (DE-Seite) des Motors bezeichnet.

Diese Zusammenhänge betreffen selbstredend auch die Vorgänge auf der anderen Stirnseite III mit dem Wickelkopf I.

In der Ausführung nach FIG 2 weist das Lagerschild 8 in seinem Aufnahmeraum 9 eine Beschichtung 12, insbesondere hydrophobe Beschichtung 9 auf.

Damit lässt sich u.a. das Lagerschild 8, z.B. für einen Zerlegevorgang der dynamoelektrischen Maschine 1 leicht vom Wickelkopf I, II trennen.

Des Weiteren weisen die Lagerschilde 8 zur zusätzlichen Formung des Wickelkopfes I, II und zur Führung des Imprägnierharzes 23 eine Umlaufkante 10 auf.

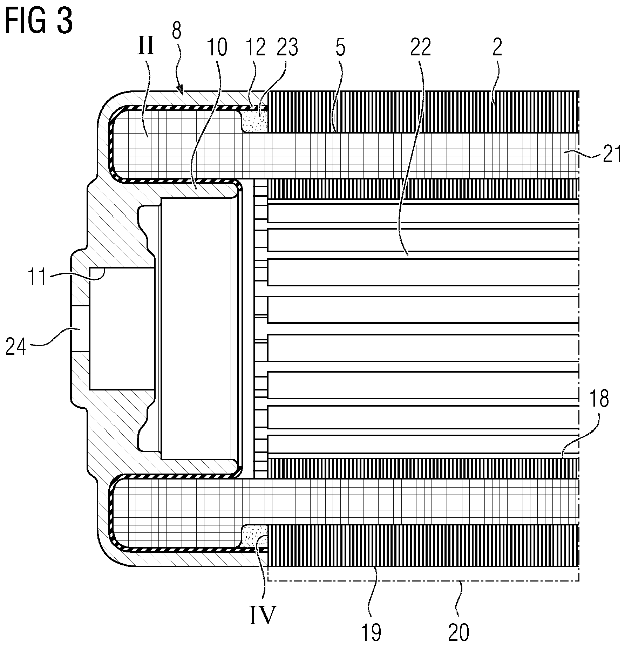

FIG 3 zeigt den oben beschriebenen Vorgang in zusammengebautem Zustand. Das Lagerschild 8 schließt an der radial äußeren Kante mit der Stirnseite IV des Stators 2 formschlüssig ab.

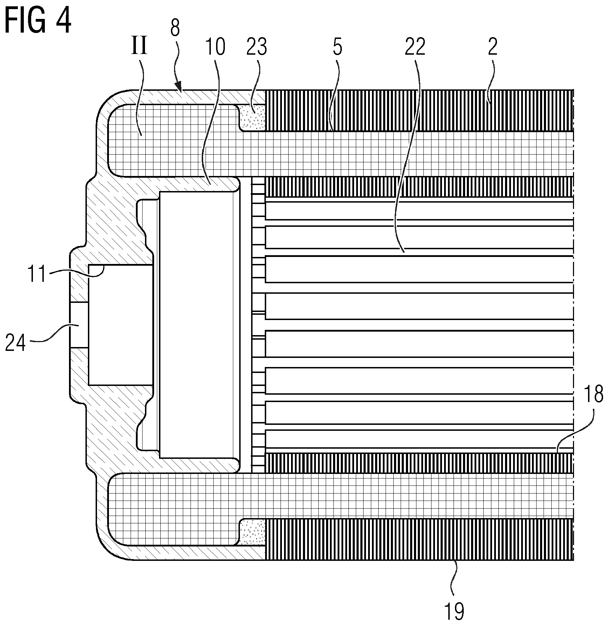

FIG 4 zeigt den oben beschriebenen Vorgang in zusammengebautem Zustand, wobei das Lagerschild 8 in diesem Fall nicht beschichtet ist. Das Lagerschild 8 schließt wieder an der radial äußeren Kante mit der Stirnseite IV des Stators 2 formschlüssig ab.

Grundsätzlich wird durch die Lagerschilde der Wickelkopf I, II geformt, komprimiert und wärmetechnisch an das jeweilige Lagerschild 8 angebunden.

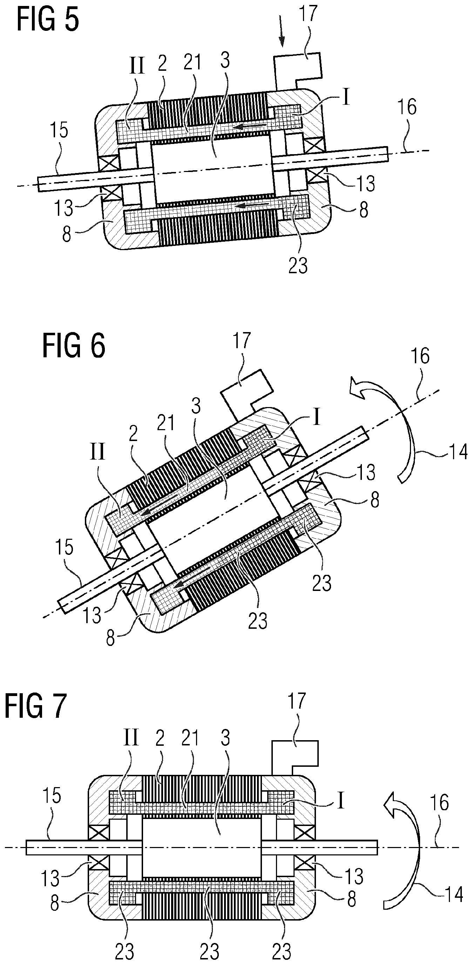

FIG 5 bis FIG 7 zeigen den prinzipiellen Herstellungsvorgang einer derartigen dynamoelektrischen Maschine 1. Der Stator 2, ist mit dem Wicklungssystem 21 versehen, da über Träufelvorgänge oder Einziehvorgänge in den Nuten 5 positioniert wurde. Dabei werden an den Stirnseiten III, IV Wickelköpfe I, II ausbildet und mit den Lagerschilden 8 an den jeweiligen Stirnseiten III, IV versehen. Ein Lagerschild 8 ist mit dem Klemmkastensockel 17 versehen über den auf dieser Seite der dynamoelektrischen Maschine 1 das Wicklungssystem 21, also Wickelköpfe I, II und die Wicklung in den Nuten 5 mit dem Imprägnierharz 23 versehen wird. Durch dementsprechende Bewegungsmuster der dynamoelektrischen Maschine 1, wie Kippung und Drehung gemäß FIG 6 während des Bestückungsprozesses verteilt sich das Imprägnierharz 23 nunmehr, wie dies durch eine dementsprechende Schraffur gezeigt ist. Das Imprägnierharz 23 wird zunächst auf der Stirnseite III im Aufnahmeraum 9 des Wickelkopfes I zugeführt und verteilt sich anschließend axial in die mit dem Wicklungssystem 21 versehenen Nuten 5 und wie FIG 7 zeigt, auch letztendlich in den Aufnahmeraum 9 des Wickelkopf II.

Aufgrund der mit der Drehung verbundenen Fliehkräfte dringt das Imprägnierharz 23 während der Bestückung weder über den Aufnahmeraum 9 noch über Nutschlitze 22 in den Raum des Rotors 3.

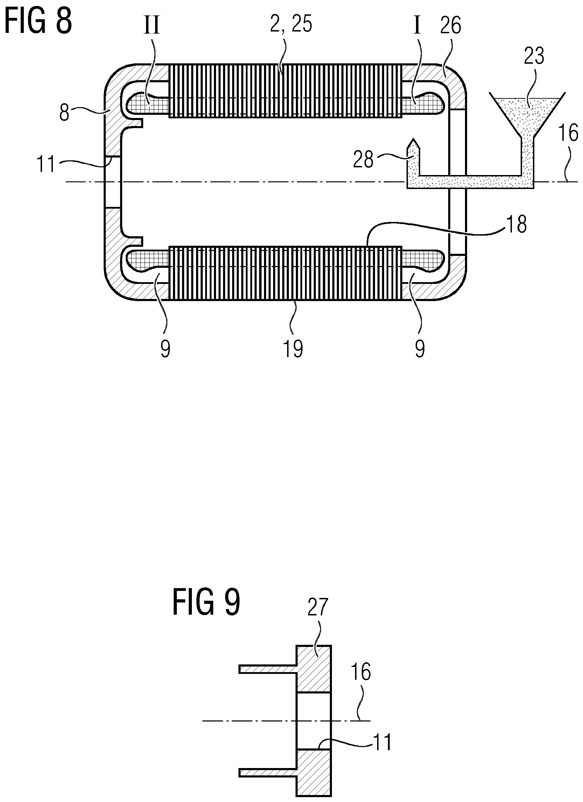

In einer weiteren Ausführung gemäß FIG 8 wird auf der NDE-Seite der dynamoelektrischen Maschine 1 lediglich ein Adapterlagerschild 26 vorgesehen, das den Einsatz von Düsen 28 zur Einbringung des Imprägnierharzes 23 gestattet und ein anschließendes axiales Einsetzen des Rotors 3 zusammen mit einem Lagerelement 27 von der NDE-Seite ermöglicht.

Dabei wird die Düse 28 einer nicht näher dargestellten Imprägniervorrichtung axial über das Adapterlagerschild 26 in die Statorbohrung bzw. Innenmantelfläche 18 eingebracht und zumindest der NDE-seitige Wickelkopf I mit Imprägnierharz 23 beaufschlagt. Die Verteilung des Imprägnierharzes 23 erfolgt wie oben beschrieben. Das Harz fließt durch die Neigung und eine geeignete Drehbewegung und/oder Taumelbewegung des Stators 2 (Präzession und Nutation möglich) entlang der Nuten 5 im Wesentlichen axial durch den Stator 2, beispielsweise über Kapillare der Wicklung 21 in den Nuten 5 und/oder zwischen einem Nutkastenpapier und einem Deckschieberpapier als Kanal, bis es den auf der anderen Seite des Stators 2 befindlichen Wickelkopf II erreicht und befüllt hat.

Erst nach der Imprägnierung und vor dem Einsetzen des Rotors 3 wird der Lagersitz auf der NDE-Seite gedreht.

Das Lagerelement 27 gemäß FIG 9 und Adapterlagerschild 26 bilden auf der NDE-Seite zusammen das Lagerschild 8.

Damit ist, wie auch in FIG 1 beschrieben wurde, eine gehäuselose dynamoelektrische Maschine 1 geschaffen, die in einfacher Art und Weise hergestellt werden kann. Eine Beschichtung der Aufnahmeräume 9 der Lagerschilde 8 bzw. Adapterlagerschilde 26 und/oder der Lagerelemente 27 gestattet es, die dynamoelektrische Maschine 1 einfach zu zerlegen und ggf. Komponenten dieser dynamoelektrischen Maschine 1 bei anderen Maschinen wieder zu verwenden/verwerten.

Um die Kühlung, insbesondere des Stators 2, zu verbessern, sind an der Außenmantelfläche 19 des hohlzylindrischen Körpers des Stators 2 oberflächenvergrößernde Strukturen 20 vorgesehen.

Für Anwendungen einer derartigen dynamoelektrischen Maschine 1, insbesondere in der Nahrungsmittelindustrie, kann es jedoch vorteilhaft sein, wenn die Außenmantelfläche 19 glatt ausgeführt ist oder mit einer Beschichtung versehen ist.

## Patentansprüche

1. Dynamoelektrische rotatorische Maschine (1), insbesondere gehäuselose dynamoelektrische Maschine, mit einem magnetisch leitfähigen hohlzylindrischen Körper, insbesondere einem Blechpaket (25) aus axial geschichteten Blechen, als Stator (2),
wobei Nuten (5) zu einer Innenmantelfläche (18) des hohlzylindrischen Körpers weisen, in denen ein Wicklungssystem (21) angeordnet ist, das an den Stirnseiten (III,IV) des hohlzylindrischen Körpers, also des Stators (2), Wickelköpfe (I, II) ausbildet,
wobei die Wickelköpfe (I,II) von halbseitig geöffneten torusförmigen Lagerschilden (8,26) zumindest abschnittsweise umgeben sind, wobei die Lagerschilde (8) zumindest im radial äußeren Bereich des hohlzylindrischen Körpers mit den Stirnseiten (III, IV) des hohlzylindrischen Körpers, abschließen.

2. Dynamoelektrische rotatorische Maschine (1) nach Anspruch 1, **dadurch gekennzeichnet, dass** an der Außenmantelfläche (19) des hohlzylindrischen Körpers, also des Stators (2), oberflächenvergrößernde Strukturen (20) vorgesehen sind,

3. Dynamoelektrische rotatorische Maschine (1) nach Anspruch 1 oder 2, **dadurch gekennzeichnet, dass** die Lagerschilde (8,26) aus Metall, Kunststoff, insbesondere einem Thermoplast oder Keramik sind.

4. Dynamoelektrische rotatorische Maschine (1) nach einem der vorhergehenden Ansprüche, **dadurch gekennzeichnet, dass** die Lagerschilde (8,26) einstückig oder zweigeteilt, insbesondere koaxial zweigeteilt sind.

5. Dynamoelektrische rotatorische Maschine (1) nach einem der vorhergehenden Ansprüche, **dadurch gekennzeichnet, dass** die Lagerschilde (8,26) innen be-schichtet sind, insbesondere eine hydrophobe Beschichtung (12) und/oder eine Isolationsschicht aufweisen.

6. Dynamoelektrische rotatorische Maschine (1) nach einem der vorhergehenden Ansprüche 3, 4 oder 5, **dadurch gekennzeichnet, dass** das Lagerschild (8,26) aus Thermoplast Additive zur mechanischen Stabilisierung und/oder zur verbesserten Wärmeleitfähigkeit aufweist.

7. Verfahren zur Herstellung eines Stators (2) einer dynamoelektrischen rotatorischen Maschine (1), insbesondere gehäuselose dynamoelektrische Maschine, nach einem oder mehreren der vorhergehenden Ansprüche mit einem magnetisch leitfähigen hohlzylindrischen Körper, insbesondere einem Blechpaket (25) aus axial geschichteten Blechen,
wobei Nuten (5) zu einer Innenmantelfläche (18) des hohlzylindrischen Körpers weisen, in denen ein Wicklungssystem (21) angeordnet ist, das an den Stirnseiten (III,IV) des hohlzylindrischen Körpers Wickelköpfe (I,II) ausbildet,
wobei die Wickelköpfe (I,II) von halbseitig geöffneten torusförmigen Lagerschilden (8) oder Adapterlagerschilden (26) zumindest abschnittsweise umgeben sind,
wobei die Lagerschilde (8) zumindest im radial äußeren Bereich des hohlzylindrischen Körpers mit den Stirnseiten (III,IV) des hohlzylindrischen Körpers abschließen, durch folgende Schritte:
- Herstellen eines magnetisch leitfähigen hohlzylindrischen Körpers, insbesondere eines Blechpaketes (25) aus axial geschichteten Blechen, wobei Nuten (5) zu einer Innenmantelfläche (18) des hohlzylindrischen Körpers weisen und an der Außenmantelfläche (19) des hohlzylindrischen Körpers oberflächenvergrößernde Strukturen (20) ausgebildet werden oder glatt ausgeführt ist,
- Positionieren eines Wicklungssystems (21) in den Nuten (5), so dass an den Stirnseiten (III,IV) des hohlzylindrischen Körpers Wickelköpfe (I,II) ausgebildet werden,
- Aufpressen von halbseitig geöffneten torusförmigen Lagerschilden (8) auf die Wickelköpfe (I,II) an den Stirnseiten (III, IV) des hohlzylindrischen Körpers, und Einsetzen des Rotors (3),
- Einbringen von flüssigem Imprägnierharz (23) in zumindest einen Aufnahmeraum (9) eines Wickelkopfes (I,II) des Stators (2), insbesondere über einen Klemmenkastensockel (17), wobei die dynamoelektrische rotatorische Maschine (1) an der Welle (15) des Rotors (3) gehalten und durch Kippen der Achse (16) und/oder Dreh- und/oder Taumelbewegungen die Verteilung des Imprägnierharzes (23) in der Nut (5) und dem DE- und NDE-seitigen Lagerschild (8) bewirkt.

8. Verfahren zur Herstellung eines Stators (2) einer dynamoelektrischen rotatorischen Maschine (1), insbesondere gehäuselose dynamoelektrische Maschine, nach einem oder mehreren der Ansprüche 1 bis 6, mit einem magnetisch leitfähigen hohlzylindrischen Körper, insbesondere einem Blechpaket (25) aus axial geschichteten Blechen,
wobei Nuten (5) zu einer Innenmantelfläche (18) des hohlzylindrischen Körpers weisen, in denen ein Wicklungssystem (21) angeordnet ist, das an den Stirnseiten (III,IV) des hohlzylindrischen Körpers Wickelköpfe (I,II) ausbildet,
wobei die Wickelköpfe (I,II) von halbseitig geöffneten torusförmigen Lagerschilden (8) oder Adapterlagerschilden (26) zumindest abschnittsweise umgeben sind,
wobei die Lagerschilde (8) zumindest im radial äußeren Bereich des hohlzylindrischen Körpers mit den Stirnseiten (III,IV) des hohlzylindrischen Körpers abschließen, durch folgende Schritte:
- Herstellen eines magnetisch leitfähigen hohlzylindrischen Körpers, insbesondere eines Blechpaketes (25) aus axial geschichteten Blechen, wobei Nuten (5) zu einer Innenmantelfläche (18) des hohlzylindrischen Körpers weisen und an der Außenmantelfläche (19) des hohlzylindrischen Körpers oberflächenvergrößernde Strukturen (20) ausgebildet werden oder glatt ausgeführt ist,
- Positionieren eines Wicklungssystems (21) in den Nuten (5), so dass an den Stirnseiten (III,IV) des hohlzylindrischen Körpers Wickelköpfe (I,II) ausgebildet werden,
- Aufpressen von halbseitig geöffneten torusförmigen Lagerschilden (8) oder Adapterlagerschilden (26) auf die Wickelköpfe (I,II) an den Stirnseiten (III, IV) des hohlzylindrischen Körpers,
- Einbringen von flüssigem Imprägnierharz (23) in zumindest einen Aufnahmeraum (9) eines Wickelkopfes (I,II) des Stators (2), insbesondere über eine axiale Öffnung im Adapterlagerschild (26), wobei der Stator (2) der dynamoelektrischen rotatorischen Maschine (1) am Außenumfang gehalten ist und durch Kippen der Achse (16) und/oder Dreh- und/oder Taumelbewegungen die Verteilung des Imprägnierharzes (23) in der Nut (5) und dem DE- und NDE-seitigen Lagerschild (8) bewirkt.

9. Verfahren zur Herstellung eines Stators (2) einer dynamoelektrische rotatorische Maschine (1), nach Anspruch 7 oder 8, **dadurch gekennzeichnet , dass** als Imprägnierharz (23) ein vorgemischtes zweikomponentiges Imprägnierharz verwendet wird.

10. Verfahren zur Herstellung eines Stators (2) einer dynamoelektrische rotatorische Maschine (1), nach einem der Ansprüche 7 bis 9, **dadurch gekennzeichnet, dass** die Bewegungen der Achse (16) mit Stator (2) mittels einer Spannvorrichtung erfolgt, welche Bewegung zumindest zeitweise während des Beschickungsvorganges mit Imprägnierharz (23) derart stattfindet, dass ein Austreten des Imprägnierharzes (23) über einen Nutschlitz (22) u.a. aufgrund der Fliehkräfte dieser Bewegungen unterbunden wird.
